(19) Europäisches Patentamt
European Patent Office
Office européen des brevets

(11) **EP 3 178 340 B1**

(12) **EUROPEAN PATENT SPECIFICATION**

(45) Date of publication and mention
of the grant of the patent:
**31.07.2019 Bulletin 2019/31**

(51) Int Cl.:
**A43B 13/04** *(2006.01)*　　**C08J 9/00** *(2006.01)*

(21) Application number: **14899199.5**

(86) International application number:
**PCT/JP2014/070888**

(22) Date of filing: **07.08.2014**

(87) International publication number:
**WO 2016/021023 (11.02.2016 Gazette 2016/06)**

(54) **SOLE FOR SHOES, AND SHOES**

SOHLE FÜR SCHUHE SOWIE SCHUHE

SEMELLE POUR CHAUSSURES, ET CHAUSSURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2017 Bulletin 2017/24**

(73) Proprietor: **ASICS Corporation
Kobe-shi, Hyogo 650-8555 (JP)**

(72) Inventors:
 • **SAWADA, Daisuke
  Kobe-shi, Hyogo 650-8555 (JP)**
 • **IWASHITA, Naoto
  Kobe-shi, Hyogo 650-8555 (JP)**
 • **MIYAZAKI, Hideyuki
  Kobe-shi, Hyogo 650-8555 (JP)**

 • **KAMIMURA, Takuro
  Kobe-shi, Hyogo 650-8555 (JP)**

(74) Representative: **Zimmermann & Partner
Patentanwälte mbB
Josephspitalstr. 15
80331 München (DE)**

(56) References cited:
　**WO-A1-2006/004036　　WO-A1-2008/013060
　WO-A1-2008/013060　　WO-A2-2010/050628
　JP-A- S6 155 126　　　JP-A- S6 155 126
　JP-A- S6 232 129　　　JP-A- H11 206 407
　JP-A- H11 206 407　　JP-A- 2005 087 408
　JP-B1- 5 568 698　　　JP-B1- 5 568 698
　JP-B2- H 085 983　　　US-A- 4 418 483**

**Description**

TECHNICAL FIELD

The present invention relates to a shoe sole suitable as a structural element of a shoe, and to a shoe using the same.

BACKGROUND ART

A shoe is manufactured by attaching a shoe sole, such as an outsole and a midsole, to an upper covering a top of a foot.

In general, a shoe sole made of rubber is a rubber product obtained by forming a rubber composition including a rubber component, a reinforcing agent, a vulcanization accelerator, and the like. As the reinforcing agent, silica is usually used (as in JP 2005-058646 A).

In recent years, waste materials (used resins) have been recycled for environmental protection and because of increased costs of materials. Such waste materials include, for example, wastes of products like shoes and sporting goods; remnants arising in manufacturing plants; and unnecessary materials generated for other reasons. Also in the field of manufacturing of shoes, there is a strong request for producing a shoe sole using the rubber composition containing such a waste material as described above.

However, some of these waste materials may contain crosslinked resins. According to the studies of the present inventors, there is a problem that a sole made of a rubber composition containing a crosslinked resin has poor abrasion resistance.

Furthermore, there is a need for providing strength and a moderate hardness for a sole from a viewpoint of durability and comfortableness during wearing the shoe.

JP 5 568698 B1 relates to a shoe sole suitable as a structural element of a shoe, and to a shoe using the same.

SUMMARY OF THE INVENTION

TECHNICAL PROBLEM

A first object of the present invention is to provide a shoe sole containing a crosslinked resin, wherein the shoe sole has excellent abrasion resistance.

A second object of the present invention is to provide a shoe sole containing a crosslinked resin, wherein the shoe sole has excellent strength and a moderate hardness.

SOLUTION TO PROBLEM

In order to achieve the object described above, the present inventors have made an extensive study on such materials that allow the use of a crosslinked resin and at the same time, make it possible to improve the abrasion resistance. Crosslinked resins, in which neighboring polymer molecules have been crosslinked, are difficult to melt. For this reason, the present inventors have been considering that even though a crosslinked resin is compounded into a rubber component, the resin and the rubber component do not sufficiently bond to each other, so the improvement in its abrasion resistance cannot be expected or if any, a slight improvement in its abrasion resistance is achieved. On the contrary, the present inventors have found that a shoe sole excellent in abrasion resistance can be obtained by adding a crosslinked ethylene-based polymer and 1,2-polybutadiene in a rubber component. Based on this finding, the present inventors have reached the completion of the present invention.

The present invention relates to a shoe sole as specified in appended independent claim 1 and to a method of manufacturing the shoe sole according to appended independent claim 11. Preferred embodiments of the invention are disclosed in the dependent claims. Such a shoe sole may be used as an outsole for a shoe, for example.

In a preferable shoe sole of the present invention, the content of the crosslinked ethylene-based polymer is 3 parts by mass to 60 parts by mass with respect to 100 parts by mass of the rubber component.

In a preferable shoe sole of the present invention, a ratio of the crosslinked ethylene-based polymer to the 1,2-polybutadiene (content (mass) of the crosslinked ethylene-based polymer/content (mass) of 1,2-polybutadiene) is 0.9 to 6.5.

In a preferable shoe sole of the present invention, the rubber component contains at least one of the natural rubber and the isoprene rubber in an amount of 70 parts by mass or more in 100 parts by mass of the rubber component.

A preferable shoe sole of the present invention further contains a crosslinking agent including an organic peroxide.

A preferable shoe sole of the present invention contains the organic peroxide in an amount of more than 0 parts by mass and 10 parts by mass or less with respect to 100 parts by mass of the rubber component.

In a preferable shoe sole of the present invention, the rubber component is composed of the natural rubber alone, the isoprene rubber alone, or a mixture of the natural rubber and the isoprene rubber.

In a preferable shoe sole of the present invention, the crosslinked ethylene-based polymer is obtained from a pulverized product of a waste material.

A preferable shoe sole of the present invention is a non-foam.

According to another aspect of the present invention, a shoe is provided.

The shoe includes any one of the shoe sole mentioned above.

The shoe sole of the present invention, which includes 1,2-polybutadiene and a crosslinked ethylene-based polymer mixed therein, is excellent in abrasion resistance. A preferable shoe sole of the present invention is excellent in strength and also have a moderate hardness, and thus the use of this shoe sole allows providing a shoe that is hardly abraded or broken and is excellent in foot comfort.

BRIEF DESCRIPTION OF THE DRAWINGS

Fig. 1 is a side view illustrating one embodiment of the shoe according to the present invention.
Fig. 2 is an sectional view taken along the line II-II in Fig. 1.
Fig. 3 is a side view illustrating another embodiment of the shoe according to the present invention.

DETAILED DESCRIPTION OF THE EMBODIMENTS

Hereinafter, a shoe sole and a shoe of the present invention are described. In the present specification, a range of numeric values describing with the wording "to" means that the range of numeric values includes a value before "to" as a lower limit and a value after "to" as an upper limit.

[Structure of shoe of present invention]

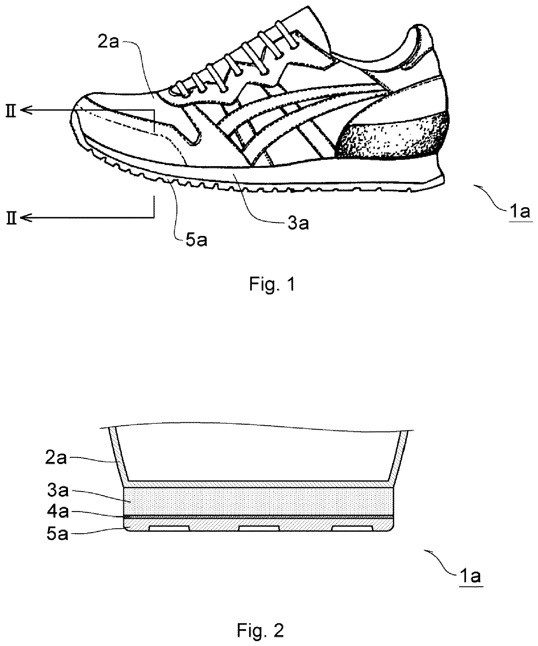

In Figs. 1 and 2, a shoe 1a according to one embodiment of the present invention has an upper 2a covering a top of a foot, a midsole 3a disposed beneath the upper 2a, and an outsole 5a disposed on the lower surface of the midsole 3a. The midsole 3a is attached to the lower end of the upper 2a. The outsole 5a is attached across the lower surface of the midsole 3a. Methods for attaching the midsole 3a and the outsole 5a are not particularly limited, and typically include gluing using an adhesive 4a. In cases where the outsole 5a and the midsole 3a have the property of adhering to each other, it is also possible that they are directly adhered to each other. In addition, methods for attaching the upper 2a and the midsole 3a are not particularly limited, and include, for example, gluing using an adhesive. For the shoe 1a, the lower surface of the outsole 5a comes into contact with the ground.

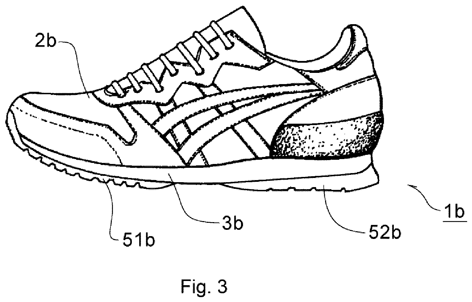

In Fig. 3, a shoe 1b according to another embodiment of the present invention has an upper 2b covering a top of a foot, a midsole 3b disposed beneath the upper 2b, and a first outsole 51b and a second outsole 52b disposed on the lower surface of the midsole 3b. In the case of this shoe 1b, the respective areas of the outsoles 51b and 52b are smaller than that of the lower surface of the midsole 3b. Therefore, there is exposed part of the lower surface of the midsole 3b. The exemplary shoe 1b illustrated in Fig. 3 is provided with two outsoles 51b and 52b, which each have an area smaller than that of the midsole 3b, but the present invention is not limited to this type of shoe. For example, a shoe according to the present invention may be provided with a single outsole that has an area smaller than that of the midsole 3b, or with three or more outsoles that each have an area smaller than that of the midsole 3b (neither of these examples being illustrated in the drawings).

In Fig. 3, a first outsole 51b is attached in an anterior region of the lower surface of the midsole 3b, and a second outsole 52b is attached in a posterior region of the lower surface of the midsole 3b. Of course, the position of an outsole having a smaller area is not limited to an anterior or posterior region of the lower surface of the midsole 3b, and can be modified as appropriate. For the shoe 1b, the lower surface of the outsoles 51b and 52b and a part of the lower surface of the midsole 3b come into contact with the ground.

The respective lower surfaces of the outsoles 5a, 51b, and 52b are usually formed in a concave-convex shape as illustrated in Figs. 1 to 3. However, the shape of the lower surface of the outsole is not limited to such a concave-convex shape, and all or at least one of the outsoles illustrated may have a lower surface formed in a flat shape (not illustrated). Also, all or at least one of the outsoles illustrated may have a lower surface dotted with a plurality of studs of a different structure (not illustrated).

The respective thicknesses of the outsoles 5a, 51b, and 52b are not particularly limited, and these outsoles are each formed so as to have a thickness of usually 1 mm or more, preferably 2 mm to 10 mm. The respective thicknesses of the midsoles 3a and 3b are also not particularly limited, and these midsoles are each formed so as to have a thickness of usually 3 mm or more, preferably 4 mm to 20 mm.

The above-mentioned outsole is a bottom element of a shoe that comes into contact with the ground, and can be appropriately used wholly or partially over the lower surface of the shoe, as described above. The outsole is not limited to a bottom element that comes into constant contact with the ground. The concept of the outsole also includes a bottom element that does not come into contact with the ground in normal cases and becomes deformed by external forces (such as an impact when the foot touches the ground) so that the bottom element may come into contact with ground. The bottom element that becomes deformed by such external forces so that it may come into contact with ground includes a reinforcing element such as a shank element and the like. The shank element is a bottom element that is disposed in a region corresponding to the arch of a foot.

A shoe sole of the present invention is usually used for the above-mentioned outsole. In cases of shoes having a plurality of outsoles, a shoe sole of the present invention can be used for some or all of the plurality of outsoles. A shoe sole of the present invention can also be used for the above-mentioned midsole. A shoe sole of the present invention is used as an outsole, while a material that is not within the present invention may be used as a different structural element of a shoe including a midsole.

[Shoe sole of the present invention]

A shoe sole of the present invention contains a rubber component, a crosslinked ethylene-based polymer, and 1,2-polybutadiene, and as necessary, contains silica and additives. A shoe sole of the present invention is obtained by forming a rubber composition into which these components are compounded in their respective required amounts. A shoe sole of the present invention is excellent in abrasion resistance. The abrasion resistance refers to a property of being resistant to abrasion. Furthermore, since the sole is also excellent in strength, it is hardly abraded or broken and it is excellent in durability. Moreover, since the sole has a moderate hardness, a shoe including the sole is excellent in foot comfort.

The shoe sole of the present invention may be made of a non-foam or may be made of a foam. The non-foam means a rubber product not foamed. When a shoe sole of the present invention is used as an outer sole, the shoe sole is preferably a non-foam.

(Rubber component)

The rubber component contains at least one of a natural rubber and an isoprene rubber, and may contain another rubber as necessary. The rubber component contains at least one of the natural rubber and the isoprene rubber preferably in an amount of 70 parts by mass or more in 100 parts by mass of the rubber component, more preferably in an amount of 75 parts by mass or more, further preferably in an amount of 80 parts by mass or more. The rubber component containing 70 parts by mass or more of at least one of the natural rubber and the isoprene rubber in 100 parts by mass of the rubber component can form a sole excellent in abrasion resistance and strength.

Here, the natural rubber is a rubber containing isoprene as a major component, and the isoprene rubber is a synthetic rubber that is industrially manufactured. Both the natural rubber and the isoprene rubber contain an isoprene polymer and are rubbers having substantially similar structures and physical properties, and thus may not need to be distinguished distinctly from each other. In the present invention, the natural rubber refers to an isoprene polymer obtained from trees, and the isoprene rubber refers to an isoprene polymer derived from petroleum. The respective weight-average molecular weights of the natural rubber and the isoprene rubber are not particularly limited, and are, for example, 100,000 to 1,000,000.

Another rubber refers to a rubber other than a natural rubber and an isoprene rubber. Another rubber is not particularly limited, and includes, for example, diene rubbers such as a butadiene rubber (BR) and a chloroprene rubber (CR); diene copolymer rubbers such as a styrene-butadiene rubber (SBR), a styrene-butadiene-styrene rubber (SBSR), an acrylonitrile-butadiene rubber (NBR), a styrene-isoprene copolymer (SIR), and a butyl rubber (IIR); non-diene rubbers such as a urethane rubber, an acrylic rubber, and a silicone rubber. These copolymer rubbers may be block copolymers, or alternatively may be random copolymers. Another rubber as mentioned above can be used alone or in combination of two or more kinds.

The rubber component is composed of only at least one of a natural rubber and an isoprene rubber, or alternatively of at least any one of a natural rubber and an isoprene rubber, and another rubber.

When composed of only at least one of a natural rubber and an isoprene rubber, the rubber component is composed of any one of the followings: (1) the natural rubber alone; (2) the isoprene rubber alone; or (3) a mixture of the natural rubber and the isoprene rubber. When composed of at least one of a natural rubber and an isoprene rubber, and another rubber, the rubber component is composed of any one of the followings: (1) a mixture of the natural rubber and another rubber; (2) a mixture of the isoprene rubber and another rubber; or (3) a mixture of the natural rubber, the isoprene rubber and another rubber.

In the case where the rubber component contains both a natural rubber and an isoprene rubber, their compounding ratios are not particularly limited. By way of example, they are compounded at a ratio (by mass) of natural rubber : isoprene rubber of 1 : 99 to 99 : 1. Compounding of a natural rubber in relatively high amounts allows the construction of a shoe sole that has a high percentage of a non-petroleum-derived component.

In the case where the rubber component is composed of at least any one of a natural rubber and an isoprene rubber, and another rubber, their compounding ratios are not particularly limited, with the proviso that the rubber component contains any one of the natural rubber and the isoprene rubber in an amount of 70 parts by mass or more in 100 parts by mass of the rubber component. For example, the compounding ratio (by mass) of at least any one of the natural rubber and the isoprene rubber with respect to another rubber is 70 : 30 to 100 : 0, preferably 75 : 25 to 100 : 0, more preferably 80 : 20 to 100 : 0, further preferably from 90 : 10 to 100 : 0.

(Crosslinked ethylene-based polymer)

The crosslinked ethylene-based polymer mainly serves as a reinforcing agent which reinforces the rubber component. Hereinafter, a "ethylene-based polymer that has been subjected to crosslinking" is sometimes expressed to as a "crosslinked ethylene-based polymer".

In the present invention, the ethylene-based polymer refers to an ethylene polymer or an ethylene copolymer. These ethylene-based polymers may be used alone or as a mixture of two or more kinds.

The ethylene polymer is a homopolymer of ethylene. Examples of the ethylene polymer include a low-density polyethylene, a medium-density polyethylene, a high-density polyethylene, and a linear low-density polyethylene.

The ethylene copolymer is a polymer of an ethylene unit and a different monomer unit. The different monomer unit (monomer unit other than ethylene) is not particularly limited, and examples thereof include vinyl acetate, $\alpha$-olefin, acrylic acid, methacrylic acid, acrylic acid ester, methacrylic acid ester, vinyl alcohol, vinyl chloride, vinylidene chloride, vinyl fluoride, acrylonitrile, vinyl acetal, maleic acid, maleic acid anhydride, hydroxystyrene, and acrylamide. The monomer unit other than ethylene preferably does not contain styrene. That is, the monomer unit other than ethylene is preferably appropriately selected from monomer units excluding styrene, and one or more selected from the above-mentioned examples are more preferred.

The content of a monomer other than ethylene in the ethylene copolymer is not particularly limited, and for example, it is 5% by mass to 50% by mass, and preferably 8% by mass to 25% by mass with respect to the total amount (100% by mass) of the ethylene copolymer.

Specific examples of the ethylene copolymer include an ethylene-vinyl acetate copolymer, an ethylene-methyl methacrylate copolymer, an ethylene-acrylic acid copolymer, an ethylene-ethyl acrylate copolymer, an ethylene-methyl acrylate copolymer, an ethylene-methacrylic acid copolymer, and an ethylene-$\alpha$-olefin copolymer. These ethylene-based polymers may be used alone or as a mixture of two or more kinds. Among these ethylene copolymers, ethylene copolymers containing an olefin unit such as vinyl acetate and ethylene are preferred, and further, an ethylene-vinyl acetate copolymer and an ethylene-$\alpha$-olefin copolymer are more preferred. Further, the ethylene-vinyl acetate copolymer and/or the ethylene-$\alpha$-olefin copolymer may be used in combination with an ethylene-based polymer other than these copolymers.

Preferably, at least one selected from the ethylene-vinyl acetate copolymer and the ethylene-$\alpha$-olefin copolymer is used, and more preferably, only one of the ethylene-vinyl acetate copolymer and the ethylene-$\alpha$-olefin copolymer is used.

The ethylene-vinyl acetate copolymer is a copolymer having an ethylene unit and an vinyl acetate unit. The ethylene-vinyl acetate copolymer includes, for example, an ethylene-vinyl acetate copolymer (EVA) alone; a copolymer obtained by copolymerization using ethylene and vinyl acetate as the main components and additionally an aliphatic vinyl compound other than vinyl acetate, like a (meth)acrylic ester such as 2-ethylhexyl acrylate or the like; a copolymer obtained by copolymerization using ethylene and vinyl acetate as the main components and additionally a monomer having a functional group such as acrylic acid or the like; a modified EVA which is modified by mixing an ethylene-vinyl acetate copolymer with one or more of a rosin, a hydrogenated rosin, a rosin ester derivative, a polymerized rosin, a terpene, a modified terpene resin, an aliphatic petroleum resin, and the like.

The content of vinyl acetate in the ethylene-vinyl acetate copolymer is not particularly limited, and is, for example, 10% by mass to 50% by mass with respect to the total amount of the ethylene-vinyl acetate copolymer (100% by mass). The molecular weight of the ethylene-vinyl acetate copolymer is not particularly limited, and, for example, its weight-average molecular weight is 10,000 to 1,000,000.

The ethylene-$\alpha$-olefin copolymer is a copolymer having an ethylene unit and an $\alpha$-olefin unit. The number of carbon atoms of the $\alpha$-olefin is not particularly limited, and it is preferably 3 to 20. Examples of the $\alpha$-olefin having 3 to 20 carbon atoms include propylene, 1-butene, 4-methyl-1-pentene, 1-hexene, 1-octene, and 1-decene. Preferably, $\alpha$-olefin is 1-butene or 1-hexene. Furthermore, an ethylene-$\alpha$-olefin copolymer may contain one type of $\alpha$-olefin, or two or more types of α-olefin.

The content of ethylene in the ethylene-α-olefin copolymer is not particularly limited, and for example, it is 50% by mass to 95% by mass with respect to the total amount (100% by mass) of ethylene-α-olefin copolymer. The content of α-olefin in the ethylene-α-olefin copolymer is not particularly limited, and for example, it is more than 5% by mass and less than 50% by mass with respect to the total amount (100% by mass) of ethylene-α-olefin copolymer.

The ethylene-α-olefin copolymer may have another monomer unit in addition to ethylene and α-olefin. Examples of the monomer include conjugated dienes such as 1,3-butadiene and 2-methyl-1,3-butadiene; unconjugated dienes such as 1,4-pentadiene and 1,5-hexadiene; unsaturated carboxylic acids such as acrylic acid and methacrylic acid; unsaturated carboxylic acid esters such as methyl acrylate, ethyl acrylate, butyl acrylate, methyl methacrylate and ethyl methacrylate; and vinyl ester compounds such as vinyl acetate.

Specific examples of the ethylene-α-olefin copolymer include an ethylene-propylene copolymer, an ethylene-1-butene copolymer, an ethylene-1-hexene copolymer, an ethylene-4-methyl-1-pentene copolymer, an ethylene-1-octene copolymer, an ethylene-1-butene-1-hexene copolymer, an ethylene-1-butene-4-methyl-1-pentene copolymer, and an ethylene-1-butene-1-octene copolymer. The ethylene-1-butene copolymer, the ethylene-1-hexene copolymer, the ethylene-1-octene copolymer, the ethylene-1-butene-1-hexene copolymer, or the ethylene-1-butene-1-octene copolymer is preferably used, and the ethylene-1-butene copolymer is more preferably used.

In the present invention, a crosslinked ethylene-based polymer is used. Thus, the polyethylene, any of the ethylene- vinyl acetate copolymer, the ethylene-α-olefin copolymer and the like have been subjected to crosslinking. Methods for crosslinking the ethylene-based polymer are not particularly limited, and include chemical crosslinking by which crosslinking is performed in the presence of a radical generating agent, silane crosslinking by which crosslinking is performed in the presence of a silane compound, radiation crosslinking, and the like.

As the crosslinked ethylene-based polymer, a waste material may be used, or a virgin material may be used, or both of them may be used in combination. The waste material is a waste material of products obtained by processing treatment such as forming of a virgin material of crosslinked ethylene-based polymer. The virgin material is a crosslinked ethylene-based polymer that has not undergone processing treatment, such as forming. A crosslinked ethylene-based polymer obtained from waste materials can be obtained from, for example, wastes of products like shoes and sporting goods; remnants arising in manufacturing plants; and unnecessary materials generated for other reasons.

From the viewpoint of recycling, it is preferable that crosslinked ethylene-based polymer that can be obtained from a waste material is used.

When a crosslinked ethylene-based polymer obtained from a waste material is used, it is preferable that the crosslinked ethylene-based polymer is in a form of a particulate pulverized product obtained by pulverizing the waste material into particles of an appropriate size.

The average particle diameter of the pulverized product obtained from a waste material (pulverized product of a crosslinked ethylene-based polymer) is not particularly limited, and it is preferably 1.0 mm or less, more preferably 0.5 mm or less. Herein, the average particle diameter of the particles is a median diameter (D50) in a particle size distribution on a volume basis.

The content of a crosslinked ethylene-based polymer is not particularly limited. However, when a crosslinked ethylene-based polymer is compounded in too small amounts, a sufficient improvement in the abrasion resistance and the strength may not be achieved. From this point of view, the content of a crosslinked ethylene-based polymer is preferably 3 parts by mass or more, more preferably 8 parts by mass or more, further preferably 15 parts by mass or more, particularly preferably 25 parts by mass or more, with respect to 100 parts by mass of the rubber component. On the other hand, when a crosslinked ethylene-based polymer is compounded in too much amounts, a decrease in the strength, to the contrary, may be caused. From this point of view, the content of a crosslinked ethylene-based polymer is preferably 60 parts by mass or less, more preferably 50 parts by mass or less, particularly preferably 45 parts by mass or less, most preferably 40 parts by mass or less, with respect to 100 parts by mass of the rubber component.

Even when an ethylene-based polymer having a relatively high degree of crosslinking is compounded in a rubber composition, a shoe sole which is excellent in abrasion resistance and mechanical strength can be attained by compounding 1,2-polybutadiene together with the ethylene-based polymer.

(1,2-polybutadiene)

The 1,2-polybutadiene has a function of improving a bond between the rubber component and the crosslinked ethylene-based polymer.

For the 1,2-polybutadiene, a compound which is known as a thermoplastic elastomer can be used, and syndiotactic 1,2-polybutadiene having a high degree of crystallinity is preferred from the viewpoint of strength.

As the syndiotactic 1,2-polybutadiene, for example, one having a degree of crystallinity of 5% or more is preferred, and one having a degree of crystallinity of 10% to 40% is more preferred. Further, 1,2-polybutadiene having a melting point of 50°C to 150°C is preferred, and 1,2-polybutadiene having a melting point of 60°C to 140°C is more preferred.

The content of a 1,2-bond in a butadiene bond unit of the syndiotactic 1,2-polybutadiene is preferably 70% or more, more preferably 80% or more, further preferably 90% or more. Such 1,2-polybutadiene has high affinity with both of the rubber component and the crosslinked ethylene-based polymer, and can favorably combine them with each other. The syndiotactic 1,2-polybutadiene can be prepared, for example, by polymerizing butadiene in the presence of a catalyst containing a cobalt compound and aluminoxane; however, the production method is not limited to this method.

In the syndiotactic 1,2-polybutadiene, a small amount of conjugated diene other than butadiene may be copolymerized. Examples of the conjugated diene other than butadiene include 1,3-pentadiene, 1,3-butadiene derivatives substituted with a higher alkyl group, and 2-alkylsubstituted-1,3-butadiene. Examples of the 1,3-butadiene derivatives substituted with a higher alkyl group include 1-pentyl-1,3-butadiene, 1-hexyl-1,3-butadiene, 1-heptyl-1,3-butadiene, and 1-octyl-1,3-butadiene. Examples of the 2-alkyl-substituted-1,3-butadiene include 2-methyl-1,3-butadiene (isoprene), 2-ethyl-1,3-butadiene, 2-propyl-1,3-butadiene, 2-isopropyl-1,3-butadiene, 2-butyl-1,3-butadiene, 2-isobutyl-1,3-butadiene, 2-amyl-1,3-butadiene, 2-isoamyl-1,3-butadiene, 2-hexyl-1,3-butadiene, 2-cyclohexyl-1,3-butadiene, 2-isohexyl-1,3-butadiene, 2-heptyl-1,3-butadiene, 2-isoheptyl-1,3-butadiene, 2-octyl-1,3-butadiene, and 2-isooctyl-1,3-butadiene.

It is noted that 1,2-polybutadiene is structurally different from a butadiene rubber (BR).

A ratio of the crosslinked ethylene-based polymer to 1,2-polybutadiene is not particularly limited; however, when the amount of the crosslinked ethylene-based polymer is too large or too small to the amount of 1,2-polybutadiene, abrasion resistance and strength may be reduced. From such a viewpoint, the ratio (mass ratio) of the crosslinked ethylene-based polymer with respect to 1,2-polybutadiene is preferably 0.9 to 6.5, more preferably 1 to 6, further preferably 1.2 to 3.8, most preferably 1.4 to 3.2. The ratio (mass ratio) is determined by the content (mass) of the crosslinked ethylene-based polymer/the content (mass) of 1,2-polybutadiene.

Further, the content of 1,2-polybutadiene with respect to a rubber component is not particularly limited. The content of 1,2-polybutadiene is 3 parts by mass or more, more preferably 5 parts by mass or more, further preferably 8 parts by mass or more, particularly preferably 10 parts by mass or more, with respect to 100 parts by mass of the rubber component. On the other hand, the content of 1,2-polybutadiene is 60 parts by mass or less, more preferably 50 parts by mass or less, further preferably 45 parts by mass or less, most preferably 40 parts by mass or less, with respect to 100 parts by mass of the rubber component.

(Crosslinking agent)

The crosslinking agent is compounded for crosslinking of the rubber component. Such a crosslinking agent is not particularly limited, and includes, for example, a sulfur-containing compound, an organic peroxide, and the like. Examples of the sulfur-containing compound include sulfur, halogenated sulfur, di-2-benzothiazolyl disulfide, N-oxidiethylene-2-benzothiazolyl sulfeneamide, and the like.

Examples of the organic peroxide include dicumyl peroxide, cumene hydroperoxide, t-butyl cumyl peroxide, p-menthane hydroperoxide, di-t-butyl peroxide, 1,3-bis(t-butyl peroxyisopropyl)benzene, 1,4-bis(t-butyl peroxyisopropyl)benzene, 1,1-di-t-butylperoxy-3,3-trimethylcyclohexane, 4,4-bis-(t-butyl-peroxy)-n-butylvalerate, 2,5-dimethyl-2,5-di-t-butylperoxy hexane, 2,5-dimethyl-2,5-di-t-butylperoxyhexyne-3, 1,1-di-t-butylperoxy-3,5,5-trimethylcyclohexane, p-chlorobenzoyl peroxide, t-butylperoxy isopropyl carbonate, and t-butylperoxy benzoate. These organic peroxides may be used alone or in combination of two or more kinds.

The content of the crosslinking agent is not particularly limited, and is, for example, 0.5 parts by mass to 10 parts by mass, preferably 0.5 parts by mass to 5 parts by mass, with respect to 100 parts by mass of the rubber component.

As the crosslinking agent, only a crosslinking agent other than the organic peroxide (for example, sulfur) may be used, or only the organic peroxide may be used. However, according to research by the present inventors, it has been found that use of the organic peroxide as the crosslinking agent not only crosslinks the rubber component but can also improve the abrasion resistance and the strength. Thus, the crosslinking agent preferably contains an organic peroxide. Further, since sulfur is suitable for crosslinking the natural rubber and the isoprene rubber, the crosslinking agent more preferably contains at least both of the organic peroxide and sulfur.

The content of the organic peroxide is not particularly limited. When the shoe sole contains even a small amount of the organic peroxide, the abrasion resistance and the strength of the sole can be improved. Thus, when the organic peroxide is compounded, the content is more than 0 and 10 parts by mass or less, preferably 0.0005 parts by mass to 5 parts by mass, more preferably 0.001 parts by mass to 1.5 parts by mass, with respect to 100 parts by mass of the rubber component.

(Silica)

The silica mainly serves as a reinforcing agent which reinforces the rubber component along with the crosslinked ethylene-based polymer. The silica is compounded with the rubber composition as necessary.

As the silica, according to classification based on the method for production thereof, there are known dry silica obtained by burning silicon tetrachloride in a oxyhydrogen flame; wet silica obtained by neutralizing an alkali silicate with an acid; sol-gel process silica obtained by hydrolyzing an alkoxide of silicon in an acidic or alkaline water-containing organic solvent; colloidal silica obtained by electrodialysis of an aqueous alkali silicate solution; and the like. In the present invention, these kinds of silica may be used alone or in combination of two or more kinds. Especially, wet silica is easier in handling, with respect to other types of silica, and thus is preferably used as the silica.

The average particle size of the silica is not particularly limited, and is, for example, 5 nm to 500 nm, preferably 10 nm to 200 nm, more preferably 20 nm to 100 nm. Silica having a particle diameter in these ranges is preferred because of providing an excellent reinforcing property. Silica having an average particle diameter in the above-mentioned range can be obtained by preparation methods well-known in the art. These preparation methods include, for example, dry pulverization methods in which a jet mill, a ball mill, or the like is used to produce silica particles having a desired average particle diameter, and wet pulverization methods in which a disperser, a homogenizer, or the like is used to produce silica particles having a desired average particle diameter.

The average particle diameter of the silica is a median diameter (D50) in a particle size distribution on a volume basis. The average particle diameter of silica particles as described above can be measured using a laser diffraction particle size analyzer (manufactured by Seishin Enterprise Co., Ltd. under the trade name of "SK Laser Micron Sizer LMS-2000e").

In general, silica is compounded in the rubber component in order to improve mechanical strength of a rubber. In the present invention, a sole having excellent strength can be formed by compounding the crosslinked ethylene-based polymer and the 1,2-polybutadiene, and thus it can be said that it is not necessary to intentionally compound silica. However, a sole of the present invention may contain a silica.

When the silica is compounded, the content thereof is not particularly limited. However, when the silica is compounded in too much amounts, the hardness of the sole may be increased, and further, the abrasion resistance may be reduced. From this point of view, when the silica is compounded, the content of silica is preferably more than 0 parts by mass and 40 parts by mass or less, more preferably more than 0 parts by mass and 20 parts by mass or less, further preferably more than 0 parts by mass and 15 parts by mass or less, with respect to 100 parts by mass of the rubber component.

(Additives)

As additives, examples include a softener, a crosslinking aid, a filler, a weather-resisting agent, an antioxidant, a UV absorber, a lubricant, an antistatic agent, a dispersing agent, a foaming agent, and others. These are appropriately selected and compounded with the rubber component.

The softener has a function of improving the flexibility of shoe soles. In particular, when a silica is compounded, a softener is preferably compounded to suppress an increase of the hardness of a sole. Examples of the softener include a mineral oil such as process oil and extender oil; a vegetable oil such as tall oil fatty acid, castor oil, and linseed oil; and others. The use of a vegetable oil as the softener allows the construction of a shoe sole having a large percentage of a non-petroleum-derived component. The content of the softener is not particularly limited, and is, for example, more than 0 parts by mass and 20 parts by mass or less, preferably 1 part by mass to 20 parts by mass, more preferably 3 parts by mass to 15 parts by mass. By compounding the softener, a shoe sole having further excellent flexibility can be obtained.

The crosslinking aids are not particularly limited, and examples include zinc oxide, oxides of metals other than zinc, metal hydroxides, fatty acids, and the like. Examples of the oxides of metals other than zinc include magnesium oxide, lead monoxide, and the like. Examples of the metal hydroxides include calcium hydroxide and the like. Examples of the fatty acids include stearic acid, oleic acid, and the like. These kinds of crosslinking aids can be used alone or in combination of two or more kinds. The zinc oxide is preferably used as a crosslinking aid because the zinc oxide has excellent crosslinking promoting effect. The content of the crosslinking aid is not particularly limited, and is, for example, 1.0 part by mass to 10 parts by mass, preferably 1.5 parts by mass to 8 parts by mass, with respect to 100 parts by mass of the rubber component.

The filler is not particularly limited, and includes, for example, calcium carbonate, magnesium carbonate, magnesium oxide, titanium oxide, and the like.

A shoe sole not according to the present invention may also contain a resin component other than the crosslinked ethylene-based polymer. When a resin other than the crosslinked ethylene-based polymer is contained, such a resin may be a thermoplastic resin and may be either crosslinked or non-crosslinked. Preferably, a resin other than the crosslinked ethylene-based polymer is a non-crosslinked thermoplastic resin. When a resin other than the crosslinked ethylene-based polymer is contained, the content thereof is not particularly limited, and is, for example, 30 parts by mass or less, preferably 20 parts by mass or less, with respect to 100 parts by mass of the rubber component.

(Methods for manufacturing a shoe sole)

A shoe sole of the present invention is obtained by kneading a rubber composition in which the above-mentioned rubber component, crosslinked ethylene-based polymer, 1,2-poybutadiene, crosslinking agent and optionally other additives are compounded in their respective required amounts, and then forming the kneaded composition. The temperature during the kneading of the rubber composition is usually 140°C or lower, preferably 130°C or lower. Kneading of the rubber composition at too high temperatures may cause the initiation of the crosslinking of the rubber component. The kneading can be carried out using an open roll, a banbury mixer, a kneader, a twin-screw extruder, or the like. Further, as necessary, the rubber component and the additives (except for the crosslinking agent) are kneaded first, and then kneading may be carried out again after compounding the crosslinked ethylene-based polymer and 1,2-polybutadiene.

The forming of the rubber composition can be performed by placing it into a mold with an appropriate shape and then heating it. The heating of the rubber composition allows the crosslinking of the rubber component via the crosslinking agent, thereby yielding a shoe sole that has rubber elasticity. The temperature at which the rubber composition is subjected to forming is preferably 145°C to 200°C, more preferably 155°C to 180°C.

Since a shoe sole of the present invention contains a crosslinked ethylene-based polymer and 1,2-poybutadiene, it exhibits excellent abrasion resistance, and further, exhibits high mechanical strength and excellent durability. Furthermore, a shoe sole of the present invention has a moderate hardness.

The reason why the abrasion resistance is improved by compounding the crosslinked ethylene-based polymer and the 1,2-polybutadiene in the rubber component is not clear; however, the present inventors assume as follows.

The ethylene-based polymer is thought to have good compatibility with a rubber component such as an isoprene rubber in terms of its molecular structure and polarity. However, since the ethylene-based polymer used in the present invention is crosslinked, it is hardly melted during vulcanization of the rubber composition. Therefore, there are little or a very small number of bonding points of the crosslinked ethylene-based polymer and the rubber component at an interface between the two, and consequently the rubber component cannot be adequately reinforced with the crosslinked ethylene-based polymer. Herein, when the 1,2-polybutadiene is compounded, the 1,2-polybutadiene intervenes between the crosslinked ethylene-based polymer and the rubber component, and combines the two to improve the abrasion resistance and the strength. It is thought that particularly by compounding the organic peroxide, the organic peroxide partially crosslinks the crosslinked ethylene-based polymer with the rubber component to further improve the abrasion resistance and the strength.

In general, in order to obtain shoes that have excellent durability, the abrasion amount of a shoe sole is preferably 200 mm$^3$ or less, more preferably 170 mm$^3$ or less, further preferably 160 mm$^3$ or less. Further, the strength (tear strength) of the shoe sole is preferably 33 kgf/cm or more, more preferably 35 kgf/cm or more, further preferably 37 kgf/cm or more. In addition, in order to obtain a shoe that has good grip performance, the hardness (Shore A hardness) of the shoe sole is preferably from 40 to 65, more preferably from 40 to 60. According to the present invention, the production of the shoe sole that has an abrasion amount, strength and hardness as mentioned above can be achieved with relative ease.

Here, a value of the abrasion amount can be measured by a DIN abrasion test method in accordance with JIS K 6264 B method, a value of the tear strength can be measured by the method in accordance with JIS K 6252, and a value of the hardness (Shore-A) can be measured by the method in accordance with JIS K 6253. Details of each measurement method are explained in the Examples below.

Furthermore, according to the present invention, a crosslinked ethylene-based polymer that has been disposed of as a waste material can also be used, and thus there can be provided a shoe sole that is favorable to environmental protection.

In addition, according to the present invention, it is possible to obtain a shoe sole that has a relatively low specific gravity, and thus the use of this sole allows the production of a relatively lightweight shoes.

EXAMPLES

The present invention will be further described in detail below with reference to Examples and Comparative Examples. Here, the present invention is not limited to the following Examples. The compounding ratios of the components in the tables are expressed in parts by mass.

[Materials used]

(1) Rubber component

Isoprene rubber: manufactured by Nippon ZEON Co., Ltd. under the trade name of "Nipol 2200" and having a weight-average molecular weight of about 390,000.

Butadiene rubber: manufactured by Nippon ZEON Co., Ltd. under the trade name of "Nipol 1220" and having a weight-average molecular weight of about 430,000.

(2) Crosslinked resin

Crosslinked ethylene-vinyl acetate copolymer (hereinafter, referred to as crosslinked EVA): manufactured by TOSOH Corporation under the trade name of "Ultrathene 630". Content of vinyl acetate is 15% by mass.

Crosslinked ethylene-α-olefin copolymer (hereinafter, referred to as crosslinked Olefin): manufactured by Mitsui Chemicals, Inc. under the trade name of "TAFMER DF810". α-olefin is 1-butene.

Crosslinked styrene-ethylene-butylene-styrene block copolymer (hereinafter, referred to as crosslinked SEBS (1)): manufactured by ASAHI KASEI CHEMICALS CORPORATION under the trade name of "Tuftec H1041". Styrene content is 30% by mass.

Crosslinked styrene-ethylene-butylene-styrene block copolymer (hereinafter, referred to as crosslinked SEBS (2)): manufactured by ASAHI KASEI CHEMICALS CORPORATION under the trade name of "Tuftec H1062". Styrene content is 18% by mass.

(3) 1,2-Polybutadiene

1,2-Polybutadiene: manufactured by JSR Corporation under the trade name of "RB 820". 1,2- bond content is 92%.

(4) Crosslinking agent

Organic peroxide: dicumyl peroxide, manufactured by NOF CORPORATION under the trade name of "PERCUMYL D"
Sulfur: manufactured by Hosoi Chemical Industry Co., Ltd.

(5) Silica

Silica: wet silica having an average particle diameter of 20 nm and manufactured by Evonik-Degussa under the trade name of "Ultrasil VN3."

(6) Oil

Oil: Process oil, manufactured by JX Nippon Oil & Energy Corporation under the trade name of "Process P 200."

(7) Additive

Stearic acid: manufactured by New Japan Chemical Co., Ltd.
Crosslinking aid (a): Active zinc oxide, manufactured by The Honjo Chemical Corporation.
Crosslinking aid (b): manufactured by API Corporation under the trade name of "Acting SL."
Processing aid: polyethylene glycol, manufactured by NOF Corporation under the trade name of "PEG #4000."
Antioxidant: manufactured by OUCHI SHINKO CHEMICAL INDUSTRIAL CO., LTD. under the trade name of "Nocrack 200 (BHT)."
Vulcanization accelerators: manufactured by OUCHI SHINKO CHEMICAL INDUSTRIAL CO., LTD. under the trade names of "Nocceler MSA-G", "Nocceler D", and "Nocceler M" used in combination.

[Method for measuring abrasion amount]

The abrasion amount of rubber products of examples and comparative examples described later was checked using a DIN abrasion testing machine (manufactured by GOTECH TESTING MACHINES INC. under the trade name of "DIN Abrasion Resistance Tester GT-7012-D") according to JIS K 6264 B method.

This DIN abrasion testing machine is a testing machine used by rotating a drum having a diameter of 150 mm and a width of 460 mm provided with #60 sandpaper wound around the drum surface at a speed of 0.32 m/sec, and pressing a disk-shaped test piece against the sandpaper on the drum at a load of 10 N to abrade the test piece.

In order to smooth a plane to be abraded before the test, the test piece was preliminarily rubbed. The preliminary rubbing was performed with the test piece pressed against the drum over 20 m in an atmosphere of 23°C. Thereafter, the weight of the test piece after preliminary rubbing was measured, and a main test was conducted. In the main test, the test piece after preliminary rubbing was pressed against the drum over 40 m, and the weight of the test piece was measured. The difference in weight between before the main test and after the main test was determined (this difference is referred to as an abrasion weight). In order to compensate an influence of wear-and-tear of the sandpaper, the abrasion weight of a standard rubber was also measured in accordance with the same procedure.

Herein, the abrasion weight of the standard rubber is denoted by W1, the abrasion weight of the test piece is denoted by W2, and the specific gravity of the test piece is denoted by S. The abrasion volume A ($mm^3$) of each test piece is determined from the following formula. In each table, the abrasion volume is expressed by DIN abrasion amount.

$$\text{Formula: } A = (W2 \times 200)/(W1 \times S)$$

[Method for measuring tear strength]

The tear strength was measured by the following method according to JIS K 6252.

The tear strength of rubber products of examples and comparative examples described later was checked using a table-top precision universal tensile tester (manufactured by SHIMADZU CORPORATION under the trade name of "Autograph AGS-X"). A sheet having a thickness of 2 mm obtained in each example was punched into the shape of an angle steel without a slit using a punching cutter to obtain a sample for strength measurement. The sample for strength measurement was fixed to a testing machine using clamps, and then the sample was drawn at a clamp moving speed of 500 mm/min. The test was conducted until the sample was broken.

The maximum value of a force applied until the sample was broken is denoted by F (kgf) and the thickness of the sample is denoted by t (cm). The tear strength T (kgf/cm) is determined from the following formula.

$$\text{Formula: } T = F/t$$

[Method for measuring hardness]

Hardness (Shore-A) was measured by the following method in accordance with JIS K 6253.

A spring hardness tester type A was used to determine the hardness by putting a pressing surface of the tester into contact with a sample to be measured, which had a thickness of 6 mm or more, so that a pressing needle of the tester was placed to be perpendicular to the surface to be measured of the sample, and then pushing the pressing needle to the sample with a load of 9.81 N, followed by immediately reading the scale. The sample to be measured was prepared by stacking a plurality of sheets having a thickness of 2 mm formed in each of Examples and Comparative Examples described later, such that the sample had a thickness of 6 mm or more.

[Method for measuring specific gravity]

Specific gravity was measured in accordance with JIS K 7311 at 23°C, using an electronic densitometer (manufactured by Alfa Mirage Co., Ltd. under the trade name of "MD-300S").

[Example 1]

The compounding ratios of the components of the rubber compositions produced in Example 1 are shown in Tables 1. In all Tables, the numerical values of the components are expressed in parts by mass. The "additives" in all Tables includes 1.5 parts by mass of stearic acid, 5.0 parts by mass of crosslinking aid (a), 1.0 part by mass of crosslinking aid (b), 1.0 part by mass of processing aid, 1.0 part by mass of antioxidant, and 1.5 parts by mass of vulcanization accelerator.

The crosslinked EVA was used which had been pulverized into particles and subjected to classification with a sieve having a mesh size of 500 μm.

Specifically, the isoprene rubber, stearic acid, active zinc oxide, crosslinking aid, processing aid, and antioxidant at the compounding ratios indicated in Table 1 were kneaded using a kneader (Model DSS-10 MWB-E) under a discharging temperature condition of 130°C to 140°C. The resulting master batch was cooled, and then, the crosslinked EVA, 1,2-polybutadiene, organic peroxide, sulfur, and vulcanization accelerators were mixed with the master batch. The mixture was kneaded using an open roll. Subsequently, the kneaded material was pressed for an optimal period of time for vulcanization at 160°C and at a pressure of about 14.7 MPa using a press, so as to produce a plurality of sheets with a length of 130 mm, a width of 210 mm, and a thickness of 2 mm and a plurality of disc-shaped testing pieces with a diameter of 16 mm and a thickness of 12 mm. The sheets with a thickness of 2 mm were used to measure a tear strength, a hardness, and a specific gravity. The disc-shaped testing pieces were used to measure an abrasion amount. The sheets and the disc-shaped test pieces were used to measure the abrasion amount, tear strength, hardness, and specific gravity in accordance with the above-mentioned methods. The results are shown in Tables 1.

[Example 2 to Example 5]

As shown in Table 1, sheets and test pieces were prepared in the same manner as in Example 1 except that the content of the 1,2-polybutadiene was changed, and the abrasion amount, the tear strength, the hardness, and the specific gravity of the sheets and the test pieces were measured. The results are shown in Table 1.

[Comparative Example 1]

As shown in Table 1, sheets and test pieces were prepared in the same manner as in Example 1 except that the crosslinked EVA, 1,2-polybutadiene, and organic peroxide were not compounded, and the abrasion amount, the tear strength, the hardness, and the specific gravity of the sheets and the test pieces were measured. The results are shown in Table 1.

[Comparative Example 2]

As shown in Table 1, sheets and test pieces were prepared in the same manner as in Example 1 except that the 1,2-polybutadiene and organic peroxide were not compounded, and the abrasion amount, the tear strength, the hardness, and the specific gravity of the sheets and the test pieces were measured. The results are shown in Table 1.

[Table 1]

| | | Example 1 | Example 2 | Example 3 | Example 4 | Example 5 | Comparative Example 1 | Comparative Example 2 |
|---|---|---|---|---|---|---|---|---|
| Compo -sition | Isoprene Rubber | 100.0 | 100.0 | 100.0 | 100.0 | 100.0 | 100.0 | 100.0 |
| | Crosslinked EVA | 30.0 | 30.0 | 30.0 | 30.0 | 30.0 | - | 30.0 |
| | 1,2-polybutadiene | 5.0 | 10.0 | 15.0 | 20.0 | 30.0 | - | - |
| | Organic Peroxide | 0.15 | 0.15 | 0.15 | 0.15 | 0.15 | - | - |
| | Sulfur | 2.0 | 2.0 | 2.0 | 2.0 | 2.0 | 2.0 | 2.0 |
| | Additives | 11.0 | 11.0 | 11.0 | 11.0 | 11.0 | 11.0 | 11.0 |
| DIN Abrasion Amount ($mm^3$) | | 196 | 151 | 141 | 151 | 160 | 310 | 276 |
| Tear Strength (kgf/cm) | | 40 | 43 | 46 | 38 | 33 | 32 | 37 |
| Hardness (Shore-A) | | 52 | 53 | 53 | 54 | 56 | 38 | 48 |
| Specific Gravity ($g/cm^3$) | | 0.966 | 0.965 | 0.961 | 0.962 | 0.959 | 0.955 | 0.957 |

From a comparison between Comparative Example 1 and Comparative Example 2, improvements in abrasion resistance (reduction in abrasion amount) and strength were observed when the crosslinked EVA (crosslinked ethylene-based polymer) was compounded. However, rubber products of Comparative Examples 1 and 2 still have a very large abrasion amount, and such a rubber product which is easily abraded cannot be used for a shoe sole which is brought into contact with the ground and always undergoes friction. On the other hand, from the comparison between Examples 1 to 5 and Comparative Example 2, it is understood that the abrasion resistance is markedly improved when the 1,2-polybutadiene is compounded. The abrasion resistance is outstandingly improved particularly when 10 parts by mass or more of the 1,2-polybutadiene is compounded. From this result, it is understood that the abrasion resistance is outstandingly improved when 8 parts by mass or more of the 1,2-polybutadiene is compounded with respect to 100 parts by mass of the rubber component.

[Example 6 to Example 8 and Comparative Examples 3 to 7]

As shown in Table 2, sheets and test pieces were prepared in the same manner as in Example 1 except that the crosslinked Olefin, the crosslinked SEBS (1), or the crosslinked SEBS (2) was used in place of the crosslinked EVA, and the content of the 1,2-polybutadiene was changed to 15 parts by mass, and the abrasion amount, the tear strength, the hardness, and the specific gravity of the sheets and the test pieces were measured. The results are shown in Table 2.

The crosslinked Olefin, the crosslinked SEBS (1), and the crosslinked SEBS (2) were also pulverized into particles, and classified with a sieve having a mesh size of 500 $\mu$m before use.

[Table 2]

| | | Example 6 | Example 7 | Example 8 | Comparative Example 3 | Comparative Example 4 | Comparative Example 5 | Comparative Example 6 | Comparative Example 7 |
|---|---|---|---|---|---|---|---|---|---|
| Compo-sition | Isoprene Rubber | 100.0 | 100.0 | 100.0 | 100.0 | 100.0 | 100.0 | 100.0 | 100.0 |
| | Crosslinked Olefin | 20.0 | 30.0 | 40.0 | - | - | - | - | - |
| | Crosslinked SEBS(1) | - | - | - | 20.0 | 30.0 | - | - | - |
| | Crosslinked SEBS(2) | - | - | - | - | - | 20.0 | 30.0 | 40.0 |
| | 1,2-polybutadiene | 15.0 | 15.0 | 15.0 | 15.0 | 15.0 | 15.0 | 15.0 | 15.0 |
| | Organic Peroxide | 0.15 | 0.15 | 0.15 | 0.15 | 0.15 | 0.15 | 0.15 | 0.15 |
| | Sulfur | 2.0 | 2.0 | 2.0 | 2.0 | 2.0 | 2.0 | 2.0 | 2.0 |
| | Additives | 11.0 | 11.0 | 11.0 | 11.0 | 11.0 | 11.0 | 11.0 | 11.0 |
| DIN Abrasion Amount ($mm^3$) | | 153 | 151 | 150 | 192 | 203 | 222 | 230 | 229 |
| Tear Strength (kgf/cm) | | 46 | 49 | 50 | 44 | 42 | 43 | 41 | 44 |
| Hardness (Shore-A) | | 51 | 54 | 56 | 50 | 53 | 47 | 48 | 48 |
| Specific Gravity ($g/cm^3$) | | 0.940 | 0.938 | 0.937 | 0.945 | 0.945 | 0.940 | 0.938 | 0.936 |

From the results of Example 3 and Examples 6 to 8, it is understood that a rubber product which is excellent in the abrasion resistance and the strength is obtained even when the crosslinked Olefin is used. On the other hand, from the results of Comparative Examples 3 to 7, when the crosslinked SEBS was used, no improvement in the abrasion resistance was observed. The reason for this is not clear; however, it is supposed that since the SEBS has styrene and butylene, reaction efficiency for the organic peroxide is low, and therefore the SEBS hardly forms a structure of bonding (crosslinking structure) to the 1,2-polybutadiene and the isoprene rubber.

[Example 9 to Example 11]

As shown in Table 3, sheets and test pieces were prepared in the same manner as in Example 1 except that the content of the crosslinked EVA was changed and the content of the 1,2-polybutadiene was changed to 15 parts by mass, and the abrasion amount, the tear strength, the hardness, and the specific gravity of the sheets and the test pieces were measured. The results are shown in Table 3.

In Table 3, the composition and various measurement results of Example 3 shown in Table 1 are shown together for comparison. Also in Tables 4, 5 and 6, the results of Example 3 shown in Table 1 are shown together.

[Table 3]

| | | Example 9 | Example 10 | Example 3 | Example 11 |
|---|---|---|---|---|---|
| Compo -sition | Isoprene Rubber | 100.0 | 100.0 | 100.0 | 100.0 |
| | Crosslinked EVA | 10.0 | 20.0 | 30.0 | 40.0 |
| | 1,2-polybutadiene | 15.0 | 15.0 | 15.0 | 15.0 |
| | Organic Peroxide | 0.15 | 0.15 | 0.15 | 0.15 |
| | Sulfur | 2.0 | 2.0 | 2.0 | 2.0 |
| | Additives | 11.0 | 11.0 | 11.0 | 11.0 |
| DIN Abrasion Amount ($mm^3$) | | 172 | 158 | 141 | 145 |
| Tear Strength (kgf/cm) | | 38 | 40 | 46 | 44 |
| Hardness (Shore-A) | | 49 | 51 | 53 | 55 |
| Specific Gravity ($g/cm^3$) | | 0.952 | 0.958 | 0.961 | 0.968 |

From the results of Example 3 and Examples 9 to 11, it is understood that the abrasion resistance and the strength are improved by increasing the content of the crosslinked ethylene-based polymer. However, when the amount of the crosslinked ethylene-based polymer is too large, the ratio of the rubber component is relatively reduced, and therefore the content of the crosslinked ethylene-based polymer is thought to be preferably about 60 parts by mass or less with respect to 100 parts by mass of the rubber component.

[Example 12 to Example 16]

As shown in Table 4, sheets and test pieces were prepared in the same manner as in Example 1 except that the content of organic peroxide was changed and the content of 1,2-polybutadiene was changed to 15 parts by mass, and the abrasion amount, the tear strength, the hardness, and the specific gravity of the sheets and the test pieces were measured. The results are shown in Table 4.

[Table 4]

| | | Example 12 | Example 13 | Example 14 | Example 3 | Example 15 | Example 16 |
|---|---|---|---|---|---|---|---|
| Compo -sition | Isoprene Rubber | 100.0 | 100.0 | 100.0 | 100.0 | 100.0 | 100.0 |
| | Crosslinked EVA | 30.0 | 30.0 | 30.0 | 30.0 | 30.0 | 30.0 |
| | 1,2-polybutadiene | 15.0 | 15.0 | 15.0 | 15.0 | 15.0 | 15.0 |
| | Organic Peroxide | - | 0.05 | 0.10 | 0.15 | 0.20 | 0.30 |
| | Sulfur | 2.0 | 2.0 | 2.0 | 2.0 | 2.0 | 2.0 |
| | Additives | 11.0 | 11.0 | 11.0 | 11.0 | 11.0 | 11.0 |
| DIN Abrasion Amount ($mm^3$) | | 155 | 142 | 140 | 141 | 138 | 141 |
| Tear Strength (kgf/cm) | | 39 | 42 | 43 | 46 | 44 | 42 |
| Hardness (Shore-A) | | 53 | 53 | 53 | 53 | 53 | 54 |
| Specific Gravity ($g/cm^3$) | | 0.961 | 0.962 | 0.962 | 0.961 | 0.962 | 0.963 |

From a comparison between Example 12, Example 3, and Examples 13 to 16, further improvements in the abrasion resistance and the strength were observed when the organic peroxide was compounded.

[Example 17]

As shown in Table 5, sheets and test pieces were prepared in the same manner as in Example 1 except that the silica and the oil were added and the content of 1,2-polybutadiene was changed to 15 parts by mass, and the abrasion amount, the tear strength, the hardness, and the specific gravity of the sheets and the test pieces were measured. The results are shown in Table 5.

[Comparative Examples 8 to 10]

As shown in Table 5, sheets and test pieces were prepared in the same manner as in Example 1 except that the crosslinked EVA, the 1,2-polybutadiene, and the organic peroxide were not compounded, and the silica and the oil were added, and the abrasion amount, the tear strength, the hardness, and the specific gravity of the sheets and the test pieces were measured. The results are shown in Table 5.

[Table 5]

| | | Example 3 | Example 17 | Comparative Example 8 | Comparative Example 9 | Comparative Example 10 |
|---|---|---|---|---|---|---|
| Compo-sition | Isoprene Rubber | 100.0 | 100.0 | 100.0 | 100.0 | 100.0 |
| | Crosslinked EVA | 30.0 | 30.0 | - | - | - |
| | Silica | - | 10.0 | 10.0 | 30.0 | 50.0 |
| | 1,2-polybutadiene | 15.0 | 15.0 | - | - | - |
| | Oil | - | 1.0 | 1.0 | 3.0 | 5.0 |
| | Organic Peroxide | 0.15 | 0.15 | - | - | - |
| | Sulfur | 2.0 | 2.0 | 2.0 | 2.0 | 2.0 |
| | Additives | 11.0 | 11.0 | 11.0 | 11.0 | 11.0 |
| DIN Abrasion Amount ($mm^3$) | | 141 | 142 | 192 | 243 | 330 |

(continued)

|  | Example 3 | Example 17 | Comparative Example 8 | Comparative Example 9 | Comparative Example 10 |
|---|---|---|---|---|---|
| Tear Strength (kgf/cm) | 46 | 41 | 34 | 45 | 49 |
| Hardness (Shore-A) | 53 | 53 | 38 | 45 | 66 |
| Specific Gravity (g/cm$^3$) | 0.961 | 0.995 | 0.993 | 1.048 | 1.130 |

From a comparison between Example 17 and Comparative Example 8, it is understood that even when the silica is compounded, the abrasion resistance and the strength are improved and also a rubber product having favorable hardness can be obtained by compounding the crosslinked ethylene-based polymer and the 1,2-polybutadiene. Further, although a rubber product of Comparative Example 8 is excellent in abrasion resistance as compared to those of Comparative Examples 9 and 10, it is not suitable for a shoe sole as the strength and the hardness are low.

[Examples 18 and 19]

As shown in Table 6, sheets and test pieces were prepared in the same manner as in Example 1 except that the butadiene rubber was added and the content of the 1,2-polybutadiene was changed to 15 parts by mass, and the abrasion amount, the tear strength, the hardness, and the specific gravity of the sheets and the test pieces were measured. The results are shown in Table 6.

[Table 6]

|  |  | Example 3 | Example 18 | Example 19 |
|---|---|---|---|---|
| Compo -sition | Isoprene Rubber | 100.0 | 75.0 | 50.0 |
|  | Butadiene Rubber | - | 25.0 | 50.0 |
|  | Crosslinked EVA | 30.0 | 30.0 | 30.0 |
|  | 1,2-polybutadiene | 15.0 | 15.0 | 15.0 |
|  | Organic Peroxide | 0.15 | 0.15 | 0.15 |
|  | Sulfur | 2.0 | 2.0 | 2.0 |
|  | Additives | 11.0 | 11.0 | 11.0 |
| DIN Abrasion Amount (mm$^3$) | | 141 | 125 | 109 |
| Tear Strength (kgf/cm) | | 46 | 44 | 33 |
| Hardness (Shore-A) | | 53 | 55 | 60 |
| Specific Gravity (g/cm$^3$) | | 0.961 | 0.959 | 0.960 |

From the results of Examples 18 and 19, it is understood that a rubber product which is excellent in the abrasion resistance can be obtained even when the mixture of the isoprene rubber and the butadiene rubber is used as the rubber component. However, as the amount of the butadiene rubber increases, the strength is reduced and the hardness is increased, and therefore the content of the isoprene rubber is thought to be preferably about 70 parts by mass or more with respect to 100 parts by mass of the rubber component.

INDUSTRIAL APPLICABILITY

A shoe sole of the present invention can be used as a structural element of various shoes.
1a, 1b Shoe
2a, 2b Upper of shoe
3a, 3b Midsole of shoe
5a, 51b, 52b Outsole of shoe

**Claims**

1. A shoe sole (3a, 5a, 3b, 51b, 52b) comprising:

   a rubber component containing at least one of a natural rubber and an isoprene rubber;
   a crosslinked ethylene-based polymer; and
   1,2-polybutadiene,
   wherein the content of the 1,2-polybutadiene is 3 to 60 parts by mass with respect to 100 parts by mass of the rubber component, and
   wherein the ethylene-based polymer has been added as a crosslinked ethylene-based polymer.

2. The shoe sole according to claim 1, wherein the content of the crosslinked ethylene-based polymer is 3 to 60 parts by mass with respect to 100 parts by mass of the rubber component.

3. The shoe sole according to claim 1 or 2, wherein a ratio of the crosslinked ethylene-based polymer to the 1,2-polybutadiene (content (mass) of the crosslinked ethylene-based polymer/content (mass) of the 1,2-polybutadiene) is 0.9 to 6.5.

4. The shoe sole according to any one of claims 1 to 3, wherein the rubber component contains at least one of the natural rubber and the isoprene rubber in an amount of 70 parts by mass or more in 100 parts by mass of the rubber component.

5. The shoe sole according to any one of claims 1 to 4, further comprising a crosslinking agent including an organic peroxide.

6. The shoe sole according to claim 5, wherein the content of the organic peroxide is more than 0 parts by mass and 10 parts by mass or less with respect to 100 parts by mass of the rubber component.

7. The shoe sole according to any one of claims 1 to 6, wherein the rubber component is composed of the natural rubber alone, the isoprene rubber alone, or a mixture of the natural rubber and the isoprene rubber.

8. The shoe sole according to any one of claims 1 to 7, wherein the crosslinked ethylene-based polymer is obtained from a pulverized product of a waste material.

9. The shoe sole according to any one of claims 1 to 8, the sole being a non-foam.

10. A shoe (1a, 1b) comprising the shoe sole according to any one of claims 1 to 9.

11. A method for manufacturing a shoe sole according to claim 1, the method comprising:

    - kneading a rubber composition in which a rubber component containing at least one of a natural rubber and an isoprene rubber, a crosslinked ethylene-based polymer, a 1,2-polybutadiene in an amount of 3 to 60 parts by mass with respect to 100 parts by mass of the rubber component, and a crosslinking agent are compounded; and
    - forming the kneaded composition.

**Patentansprüche**

1. Schuhsohle (3a, 5a, 3b, 51b, 52b), umfassend:

   eine Kautschukkomponente, die mindestens eines von einem Naturkautschuk und einem Isoprenkautschuk enthält;
   ein vernetztes Polymer auf Ethylenbasis; und
   1,2-Polybutadien,
   wobei der Gehalt des 1,2-Polybutadiens 3 bis 60 Massenanteile bezogen auf 100 Massenanteile der Kautschukkomponente beträgt, und
   wobei das Polymer auf Ethylenbasis als vernetztes Polymer auf Ethylenbasis zugegeben wurde.

**2.** Schuhsohle nach Anspruch 1, wobei der Gehalt des vernetzten Polymers auf Ethylenbasis 3 bis 60 Massenanteile bezogen auf 100 Massenanteile der Kautschukkomponente beträgt.

**3.** Schuhsohle nach Anspruch 1 oder 2, wobei ein Verhältnis des vernetzten Polymers auf Ethylenbasis zum 1,2-Polybutadien (Gehalt (Masse) des vernetzten Polymers auf Ethylenbasis/Gehalt (Masse) des 1,2-Polybutadiens) 0,9 bis 6,5 beträgt.

**4.** Schuhsohle nach einem der Ansprüche 1 bis 3, wobei die Kautschukkomponente mindestens den Naturkautschuk und den Isoprenkautschuk in einer Menge von 70 Massenanteilen oder mehr in 100 Massenanteilen der Kautschukkomponente enthält.

**5.** Schuhsohle nach einem der Ansprüche 1 bis 4, ferner umfassend einen Vernetzer, der ein organisches Peroxid einschließt.

**6.** Schuhsohle nach Anspruch 5, wobei der Gehalt des organischen Peroxids mehr als 0 Massenanteile und 10 Massenanteile oder weniger in Bezug auf 100 Massenanteile der Kautschukkomponente beträgt.

**7.** Schuhsohle nach einem der Ansprüche 1 bis 6, wobei die Kautschukkomponente aus dem Naturkautschuk allein, dem Isoprenkautschuk allein oder einer Mischung aus dem Naturkautschuk und dem Isoprenkautschuk besteht.

**8.** Schuhsohle nach einem der Ansprüche 1 bis 7, wobei das vernetzte Polymer auf Ethylenbasis aus einem pulverisierten Produkt eines Abfallmaterials erhalten wird.

**9.** Schuhsohle nach einem der Ansprüche 1 bis 8, wobei die Sohle ein Nichtschaumstoff ist.

**10.** Schuh (1a, 1b), umfassend die Schuhsohle nach einem der Ansprüche 1 bis 9.

**11.** Verfahren zur Herstellung einer Schuhsohle nach Anspruch 1, wobei das Verfahren Folgendes umfasst:

- Kneten einer Kautschukzusammensetzung, wobei eine Kautschukkomponente, die mindestens einen Naturkautschuk und einen Isoprenkautschuk enthält, ein vernetztes Polymer auf Ethylenbasis, ein 1,2-Polybutadien in einer Menge von 3 bis 60 Massenanteilen bezogen auf 100 Massenanteile der Kautschukkomponente und ein Vernetzungsmittel gemischt werden; und
- Formen der gekneteten Zusammensetzung.

**Revendications**

**1.** Semelle de chaussure (3a, 5a, 3b, 51b, 52b) comprenant :

un composant de caoutchouc contenant au moins l'un d'un caoutchouc naturel et d'un caoutchouc isoprène ;
un polymère à base d'éthylène réticulé ; et
du 1,2-polybutadiène,
dans laquelle la teneur en 1,2-polybutadiène est de 3 à 60 parts en masse par rapport à 100 parts en masse du composant de caoutchouc, et
dans laquelle le polymère à base d'éthylène a été ajouté en tant que polymère à base d'éthylène réticulé.

**2.** Semelle de chaussure selon la revendication 1, dans laquelle la teneur en polymère à base d'éthylène réticulé est de 3 à 60 parts en masse par rapport à 100 parts en masse du composant de caoutchouc.

**3.** Semelle de chaussure selon la revendication 1 ou 2, dans laquelle un rapport du polymère à base d'éthylène réticulé sur le 1,2-polybutadiène (teneur (masse) du polymère à base d'éthylène réticulé/teneur (masse) du 1,2-polybutadiène) est de 0,9 à 6,5.

**4.** Semelle de chaussure selon l'une quelconque des revendications 1 à 3, dans laquelle le composant de caoutchouc contient au moins l'un du caoutchouc naturel et du caoutchouc isoprène en une quantité de 70 parts en masse ou plus pour 100 parts en masse du composant de caoutchouc.

**5.** Semelle de chaussure selon l'une quelconque des revendications 1 à 4, comprenant en outre un agent de réticulation incluant un peroxyde organique.

**6.** Semelle de chaussure selon la revendication 5, dans laquelle la teneur en peroxyde organique est plus de 0 part en masse et 10 parts en masse ou moins par rapport à 100 parts en masse du composant de caoutchouc.

**7.** Semelle de chaussure selon l'une quelconque des revendications 1 à 6, dans laquelle le composant de caoutchouc est composé du caoutchouc naturel seul, du caoutchouc isoprène seul, ou d'un mélange du caoutchouc naturel et du caoutchouc isoprène.

**8.** Semelle de chaussure selon l'une quelconque des revendications 1 à 7, dans laquelle le polymère à base d'éthylène réticulé est obtenu à partir d'un produit pulvérisé de déchets.

**9.** Semelle de chaussure selon l'une quelconque des revendications 1 à 8, la semelle étant une non-mousse.

**10.** Chaussure (1a, 1b) comprenant la semelle de chaussure selon l'une quelconque des revendications 1 à 9.

**11.** Procédé pour fabriquer une semelle de chaussure selon la revendication 1, le procédé comprenant :

- le malaxage d'une composition de caoutchouc dans laquelle un composant de caoutchouc contenant au moins l'un d'un caoutchouc naturel et d'un caoutchouc isoprène, un polymère à base d'éthylène réticulé, un 1,2-polybutadiène en une quantité de 3 à 60 parts en masse par rapport à 100 parts en masse du composant de caoutchouc et un agent de réticulation sont mélangés ; et
- la formation de la composition malaxée.

2a

II ←

II ←

5a

3a

1a

Fig. 1

2a

3a
4a
5a

1a

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005058646 A

- JP 5568698 B